# FASCICULE DE BREVET EUROPEEN

(11) **EP 1 884 099 B1**
(45) Date de publication et mention de la délivrance du brevet: **06.09.2017**
(21) Numéro de dépôt: 06755472.5
(22) Date de dépôt: 04.05.2006
(51) Int. Cl.: H04L 29/06, H04L 12/28

(54) **PROCEDE ET DISPOSITIF DE CONTROLE D'ACCES**
ZUGANGSBERECHTIGUNGSVERFAHREN UND -EINRICHTUNG
ACCESS CONTROL METHOD AND DEVICE

(30) Priorité: 09.05.2005 FR 0504647
(43) Date de publication de la demande: 06.02.2008
(73) Titulaire: Orange, 75015 Paris (FR)
(72) Inventeur: MINODIER, David, F-92794 Issy Moulineaux Cedex 9 (FR); IVANOFF, Gilles, F-92794 Issy Moulineaux Cedex 9 (FR)
(74) Mandataire: Vidon Brevets & Stratégie
(86) Numéro de dépôt international: PCT/FR2006/001018
(87) Numéro de publication internationale: WO 2006/120331

(56) Documents cités:
- EP-A1- 1 571 800
- WO-A-02/076027
- US-A1- 2003 200 172
- "Port-Based Network Access Control" IEEE STD 802.1X-2001, 13 juillet 2001 (2001-07-13), pages 1-64, XP002258531

## Description

La présente invention concerne un procédé et un dispositif de contrôle de l'accès, par un dispositif de communication, à au moins deux services par l'intermédiaire d'un réseau de communication.

Dans les systèmes classiques d'accès à l'Internet utilisant des liaisons, par exemple, de type DSL, chaque client est relié à un multiplexeur numérique de lignes de clients. La technologie de transport utilisée entre le dispositif de communication installé chez le client et le multiplexeur numérique de lignes de clients est la technologie ATM acronyme de « Asynchronous Transfer Mode ». DSL est l'acronyme de « Digital Subscriber Line ». Le multiplexeur numérique de lignes de clients est lui-même connecté à un concentrateur de sessions PPP, acronyme de « Point to Point Protocol », par l'intermédiaire d'un réseau de communication basé sur la technologie ATM.

Lorsqu'un dispositif de communication installé chez un client accède à un service tel que l'accès au réseau Internet, une session PPP est établie, entre le dispositif de communication et le concentrateur de sessions PPP, au travers du multiplexeur numérique de lignes et du réseau ATM reliant le multiplexeur numérique de lignes et le concentrateur de sessions PPP. Une session PPP est une session établie selon un protocole point à point tel que par exemple le protocole défini dans le document de l'IETF RFC 2516. IETF est l'acronyme de « Internet Engineering Task Force », RFC est l'acronyme de « Request For Comment » ou requête pour commentaire. Un concentrateur de sessions PPP est classiquement appelé un BAS, acronyme de « Broadband Access Server ». Un concentrateur de sessions PPP achemine les sessions établies par les différents dispositifs de communication vers chaque fournisseur de services auprès duquel ils sont enregistrés.

Lorsque le réseau de communication est un réseau de type ATM, à chaque fois qu'un dispositif de communication ou l'utilisateur du dispositif de communication s'enregistre auprès d'un fournisseur de services pour accéder à un service, l'opérateur du réseau de communication doit intervenir, entre autres au niveau du multiplexeur de lignes de clients, pour créer un canal virtuel ATM VC entre le modem DSL du dispositif de communication et le concentrateur de sessions PPP via le multiplexeur de lignes de clients. Cette intervention est coûteuse pour l'opérateur car elle nécessite une intervention humaine et induit nécessairement un délai de traitement.

Ainsi, à chaque fois qu'un dispositif de communication est enregistré à un nouveau service, un canal virtuel est créé pour l'accès à ce nouveau service.

Les réseaux de communication basés sur la technologie ATM sont complexes et difficiles à faire évoluer. D'autres technologies sont aujourd'hui envisagées.

Les réseaux de type GigaEthernet offrent une bande passante très importante pour la transmission d'informations. Un réseau de type GigaEthernet est un réseau de communication à haut débit basé sur la technologie Ethernet. Un réseau de type GigaEthernet autorise des transferts de données à des débits supérieurs à un Gigabits par seconde. Ces réseaux de communication ne sont pas compatibles avec les technologies couramment utilisées dans les réseaux de communication basés sur la technologie ATM. Une éventuelle utilisation de ces réseaux nécessiterait une complète modification du réseau de communication ainsi que des dispositifs de communication reliés au réseau de communication.

En outre, les réseaux ATM sont peu adaptés aux nouveaux services émergeants qui s'appuient par exemple sur des modes de transmission d'informations d'un point vers plusieurs points qui sont, par exemple, définis dans les documents RFC1112 et RFC919 publiés par L'IETF.

Il est difficilement envisageable de remplacer l'ensemble des dispositifs de communication adaptés à la technologie ATM dont sont équipés les clients, par des dispositifs de communication aptes à communiquer sur un réseau de type GigaEthernet.

Au vu des avantages des réseaux de type GigaEthernet, les opérateurs envisagent néanmoins de modifier leur réseau de communication entre le multiplexeur numérique de lignes et les différents fournisseurs de services, de manière à remplacer la technologie ATM par la technologie GigaEthernet.

Lors du remplacement d'un réseau de communication de type ATM par un réseau de communication de type GigaEthernet, des procédures de contrôle d'accès aux services proposés par des fournisseurs de service doivent être mis en place. Le protocole de contrôle d'accès tel que défini dans le standard IEEE 802.1x est l'un de ces candidats.

Le standard de contrôle d'accès IEEE 802.1x, dénommé « Port-Based Network Access Control », décrit un protocole permettant d'authentifier des dispositifs de communication sur un réseau Ethernet. Chaque dispositif de communication installé chez chacun des clients est physiquement relié à un port physique du multiplexeur numérique de lignes de clients. Le protocole 802.1x effectue un contrôle d'accès sur chacun des ports physiques sur lesquels sont reliés les dispositifs de communication des clients. Des canaux virtuels peuvent être établis sur une liaison physique reliant le port physique du dispositif de communication du client et le port physique du multiplexeur numérique de lignes. Le protocole 802.1x peut également réaliser un contrôle d'accès sur chacun de ces canaux virtuels.

Lorsqu'un dispositif de communication est rattaché par plusieurs canaux virtuels au multiplexeur numérique de lignes de clients, il est nécessaire d'effectuer un contrôle d'accès pour chacun des points d'accès de ces canaux virtuels. Cette procédure d'authentification est fastidieuse pour les utilisateurs des dispositifs de communication.

L'invention résout les inconvénients de l'art antérieur en proposant un procédé et un dispositif de contrôle d'accès qui puissent être utilisés dans un système de communication utilisant à la fois des technologies de type ATM entre un multiplexeur de lignes de clients et les dispositifs de communication qui lui sont reliés, et un réseau de communication de type GigaEthernet entre chaque multiplexeur de lignes de clients et des fournisseurs de service. De plus, l'invention propose de rendre la procédure de contrôle de l'accès d'un dispositif de communication aux services offerts par l'intermédiaire du réseau de communication simple et efficace.

A cette fin, selon un premier aspect, l'invention propose un procédé de contrôle de l'accès par un dispositif de communication à au moins deux services, le dispositif de communication étant relié à un multiplexeur de lignes de clients par l'intermédiaire d'une liaison physique sur laquelle des canaux virtuels sont établis, au moins deux des canaux virtuels permettant le transfert d'informations associées respectivement à des services, le multiplexeur de lignes de clients étant relié à des sous réseaux de communication d'un réseau de communication, chaque sous réseau de communication permettant le transfert d'informations associées respectivement à un service, caractérisé en ce que le procédé comporte les étapes de :
- réception d'informations pour l'authentification du dispositif de communication par l'intermédiaire d'un canal virtuel,
- obtention, à partir des informations reçues, d'informations représentatives de chaque service auquel le dispositif de communication est enregistré,
- interconnexion, pour chaque service auquel le dispositif de communication est enregistré, du canal virtuel permettant le transfert d'informations associées audit service avec le sous réseau de communication permettant le transfert d'informations associées audit service.

Corrélativement, l'invention concerne un dispositif de contrôle de l'accès par un dispositif de communication à au moins deux services, le dispositif de communication étant relié à un multiplexeur de lignes de clients par l'intermédiaire d'une liaison physique sur laquelle des canaux virtuels sont établis, au moins deux des canaux virtuels permettant le transfert d'informations associées respectivement à des services, le multiplexeur de lignes de clients étant relié à des sous réseaux de communication d'un réseau de communication, chaque sous réseau de communication permettant le transfert d'informations associées respectivement à un service, caractérisé en ce que le dispositif comporte :
- des moyens de réception d'informations pour l'authentification du dispositif de communication par l'intermédiaire d'un canal virtuel,
- des moyens d'obtention, à partir des informations reçues, d'informations représentatives de chaque service auquel le dispositif de communication est enregistré,
- des moyens d'interconnexion, pour chaque service auquel le dispositif de communication est enregistré, du canal virtuel permettant le transfert d'informations associées audit service avec le sous réseau de communication permettant le transfert d'informations associées audit service.

Ainsi, en obtenant des informations représentatives des services auxquels le dispositif de communication est enregistré et en interconnectant seulement chaque canal virtuel permettant le transfert d'informations associées à un service auquel le dispositif de communication est enregistré avec le sous réseau de communication correspondant, il est possible de contrôler l'accès aux différents services.

De plus, en n'effectuant qu'une seule procédure d'authentification, on donne accès à l'ensemble des services auxquels le dispositif de communication est enregistré. Il n'est plus nécessaire d'effectuer une authentification pour l'accès à chaque service. Les tâches effectuées par le dispositif de communication sont ainsi simplifiées.

De plus, il est possible de réaliser un contrôle d'accès qui puisse être utilisé dans un système de communication utilisant à la fois des technologies de type ATM entre le dispositif de communication et le multiplexeur numérique de lignes de client, et de type GigaEthernet entre chaque multiplexeur de ligne de clients et des fournisseurs de services. De plus, l'invention rend la procédure de contrôle de l'accès d'un dispositif de communication aux services offerts par l'intermédiaire du réseau de communication simple et efficace.

De plus, la présente invention permet de conserver la technologie ATM et de garder des canaux virtuels entre les multiplexeurs de lignes de clients et les dispositifs de communication. Ceci permet de ne pas avoir à remplacer les dispositifs de communication existants et de ne pas avoir à remplacer les ports physiques du multiplexeur numérique de lignes de clients où sont connectés les dispositifs de communication des clients.

Selon un autre aspect de l'invention, on vérifie et on obtient la confirmation de l'authentification du dispositif de communication auprès d'un serveur d'authentification et les informations représentatives de chaque service auquel le dispositif de communication est enregistré sont obtenues du serveur d'authentification.

Ainsi, les informations d'authentification sont centralisées dans un unique serveur d'authentification. Ce qui facilite la gestion du contrôle d'accès.

Selon un autre aspect de l'invention, les informations représentatives de chaque service auquel le dispositif de communication est enregistré sont les identifiants de chaque canal virtuel permettant le transfert d'informations associées à un service auquel le dispositif de communication est enregistré et les identifiants de chaque sous réseau permettant le transfert d'informations associées au service auquel le dispositif de communication est enregistré.

Ainsi, il est possible d'effectuer des interconnexions entre les canaux virtuels et les sous réseaux de communication de manière automatique sans qu'une intervention humaine soit nécessaire. Ceci simplifie grandement la tâche de l'opérateur en charge du réseau de communication et du multiplexeur de lignes de clients.

Selon un autre aspect de l'invention, on crée au moins un canal virtuel sur la liaison physique reliant le dispositif de communication et le multiplexeur de lignes de clients si au moins un identifiant de canal virtuel reçu ne correspond pas à un canal virtuel établi sur la liaison physique reliant le dispositif de communication et le multiplexeur de lignes de clients.

Ainsi, le nombre de canaux virtuels établis sur la liaison physique reliant le dispositif de communication et le multiplexeur de lignes de clients peut évoluer en fonction de la souscription ou de la résiliation d'une souscription à un service.

Selon un autre aspect de l'invention, le canal virtuel, par l'intermédiaire duquel les informations pour l'authentification du dispositif de communication sont reçues, est un canal virtuel prédéterminé parmi l'ensemble des canaux virtuels établis sur la liaison physique reliant le dispositif de communication et le canal virtuel.

Ainsi, les tâches effectuées par le multiplexeur de lignes de clients sont simplifiées.

Selon un autre aspect de l'invention, le canal virtuel prédéterminé est le canal virtuel permettant le transfert d'informations associées à un service prédéterminé.

Ainsi, il n'est pas nécessaire d'allouer un canal virtuel seulement pour l'authentification.

Selon un autre aspect de l'invention, chaque canal virtuel permet le transfert d'informations associées à un service respectif et le canal virtuel par l'intermédiaire duquel les informations pour l'authentification du dispositif de communication sont reçues est un quelconque canal virtuel parmi l'ensemble des canaux virtuels établis sur la liaison physique reliant le dispositif de communication et le multiplexeur de lignes de clients.

Ainsi, il n'est pas nécessaire, pour le dispositif de communication souhaitant accéder à un ou plusieurs services auxquels il est enregistré, de devoir transmettre une requête d'authentification sur un canal prédéterminé.

Selon un autre aspect de l'invention, on détecte, sur chaque canal virtuel reliant le dispositif de communication et le multiplexeur de lignes de clients, la requête d'authentification. Lorsque la requête d'authentification a été détectée et que la confirmation de l'authentification du dispositif de communication a été obtenue, on interrompt la détection, sur chaque canal virtuel établi sur le lien reliant le dispositif de communication et le multiplexeur de lignes de clients, d'une requête d'authentification.

L'invention concerne aussi le programme d'ordinateur stocké sur un support d'informations, ledit programme comportant des instructions permettant de mettre en oeuvre le procédé précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système de contrôle d'accès par un dispositif de communication à au moins deux services auxquels le dispositif de communication est enregistré ;
la Fig. 2 représente un schéma synoptique d'un multiplexeur de lignes de clients selon la présente invention ;
la Fig. 3 représente l'algorithme mis en oeuvre par un multiplexeur numérique de lignes de clients pour le contrôle de l'accès par un dispositif de communication à au moins deux services selon un premier mode de réalisation de la présente invention ;
la Fig. 4 représente l'algorithme mis en oeuvre par un multiplexeur numérique de lignes de clients pour le contrôle de l'accès par un dispositif de communication à au moins deux services selon un second mode de réalisation de la présente invention.

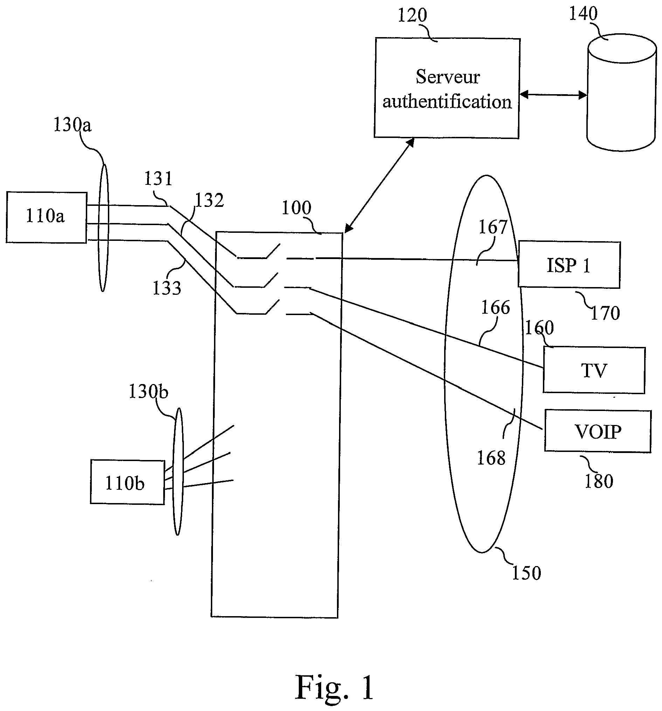

La Fig. 1 représente l'architecture du système de contrôle de l'accès par un dispositif de communication à au moins deux services auxquels le dispositif de communication est enregistré.

Dans le système de contrôle de l'accès à au moins deux services fournis par au moins un fournisseur de services, des dispositifs de communication 110a et 110b accèdent à des services fournis par des fournisseurs de services 160, 170 et 180, par l'intermédiaire d'un multiplexeur numérique de lignes de clients 100 et d'un réseau de communication 150.

Les dispositifs de communication 110 sont reliés au multiplexeur numérique de lignes de clients 100 par l'intermédiaire des liaisons physiques dédiées, telles que des paires de fils de cuivre téléphoniques, et utilisent les techniques de modulation de type DSL. Chaque client dispose à son domicile d'un dispositif de communication 110. Un dispositif de communication 110 est par exemple un ordinateur comprenant une carte de communication de type DSL ou une carte de communication externe de type DSL reliée à un ordinateur ou une passerelle permettant l'accès, aux différents terminaux lui étant associés, à divers services tels que l'Internet, la téléphonie sur IP, la télévision sur IP.

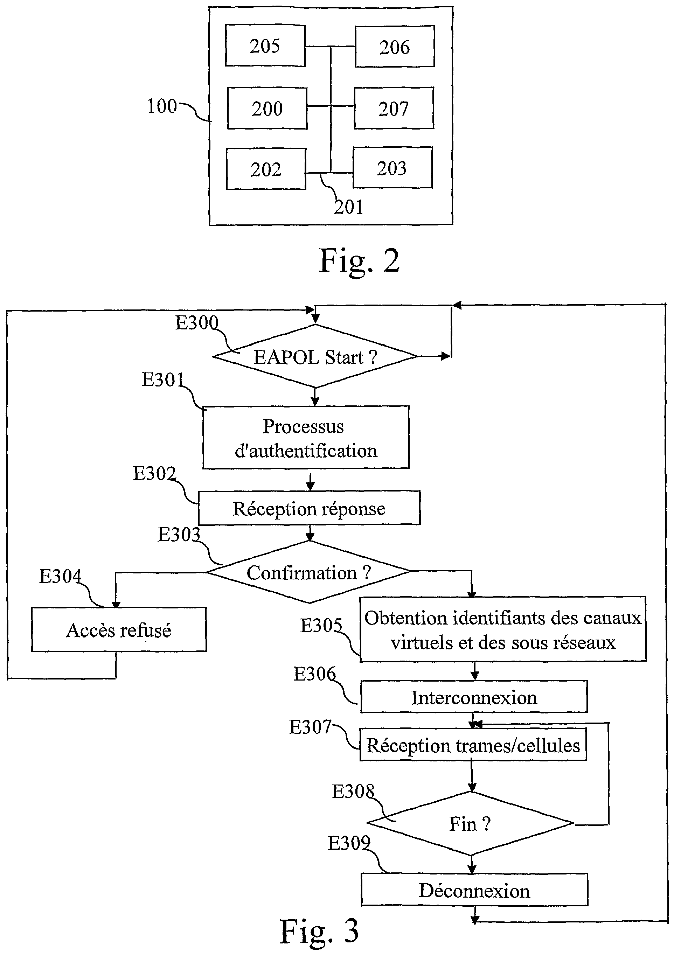

Le multiplexeur numérique de lignes de clients 100 comporte une pluralité de ports physiques. Chaque port physique du multiplexeur numérique de lignes de clients 100 est relié à un dispositif de communication 110 par une liaison physique dédiée 130. Le multiplexeur numérique de lignes de clients 100 est connu sous le terme DSLAM. DSLAM est l'acronyme de « Digital Subscriber Line Access Multiplexor ». Le multiplexeur de lignes de clients 100 sera décrit plus en détail en regard de la Fig. 2. Seuls deux dispositifs de communications 110a et 110b et deux liaisons physiques 130a et 130b sont représentés à la Fig. 1, mais on comprendra que l'invention englobe également les cas où un nombre plus important de dispositifs de communication sont reliés au multiplexeur numérique de lignes de clients 100.

Sur chaque liaison physique 130, il est établi une pluralité de canaux virtuels ATM VC entre le dispositif de communication 110 et le multiplexeur de lignes de clients 100.

Dans la Fig. 1, trois canaux virtuels 131, 132 et 133 sont représentés. Les canaux virtuels 131, 132 et 133 sont préférentiellement créés par l'opérateur du réseau de communication 150 pour chaque port du multiplexeur de lignes de clients 100 et cela même si le dispositif de communication 110 ne dispose pas d'une liaison DSL ou que le dispositif de communication 110 n'est pas enregistré à un service proposé par un fournisseur de services selon l'invention. Les canaux virtuels 131, 132 et 133 sont groupés préférentiellement dans un même chemin virtuel ou VP entre le dispositif de communication et le multiplexeur numérique de lignes de clients 100.

Le canal virtuel 131 est par exemple dédié à l'accès à un fournisseur de services Internet 170, le canal virtuel 132 est par exemple dédié à l'accès à un fournisseur de services 160 de type télévision et le canal virtuel 133 est par exemple dédié à l'accès à un fournisseur de services 180 de type téléphonie sur le réseau Internet.

Trois canaux virtuels sont représentés à la Fig. 1, mais on comprendra que l'invention englobe également les cas où un nombre plus ou moins important de canaux virtuels est créé par l'opérateur du réseau de communication 150 pour chaque port du multiplexeur de lignes de clients 100 et sur chaque liaison physique 130.

Le multiplexeur numérique de lignes de clients 100 est relié au réseau de communication 150 qui est préférentiellement un réseau de type GigaEthernet.

Des sous réseaux de communication 166, 167 et 168 sont établis sur le réseau de communication 150 entre le multiplexeur numérique de lignes de clients 100 et chaque fournisseur de services 160, 170 et 180. Les informations véhiculées dans les sous réseaux de communication 166, 167 et 168 sont transmises sous la forme dé trames Ethernet. Les sous réseaux 166, 167 et 168 permettent de limiter les ressources auxquelles les dispositifs de communication 110 ont accès. Par exemple, si le dispositif de communication 110a est client du fournisseur de services 170, les échanges entre le dispositif de communication 110a et le fournisseur de services 170 sont effectués uniquement par l'intermédiaire du sous réseau symbolisé par la liaison notée 167 en Fig. 1. Le dispositif de communication 110a ne peut accéder aux sous réseaux 166 et 168.

Si le dispositif de communication 110a est client du fournisseur de services 160, les échanges entre le dispositif de communication 110a et le fournisseur de services 160 sont effectués par l'intermédiaire du sous réseau symbolisé par la liaison notée 166 en Fig. 1. Si le dispositif de communication 110a est client du fournisseur de services 180, les échanges entre le dispositif de communication 110a et le fournisseur de services 180 sont effectués par l'intermédiaire du sous réseau symbolisé par la liaison notée 168 en Fig. 1.

Les sous réseaux de communication 166, 167 et 168 sont par exemple des réseaux virtuels appelés VLAN, acronyme de « Virtual Local Area Network », ou des sous réseaux de type LSP MPLS acronyme de « Label Switched Path Multi-Protocol Label Switching » ou des sous réseaux IP.

Le multiplexeur de lignes de clients 100 est aussi relié à un serveur d'authentification 120 par l'intermédiaire d'une liaison dédiée ou, en variante, par l'intermédiaire du réseau de communication 150.

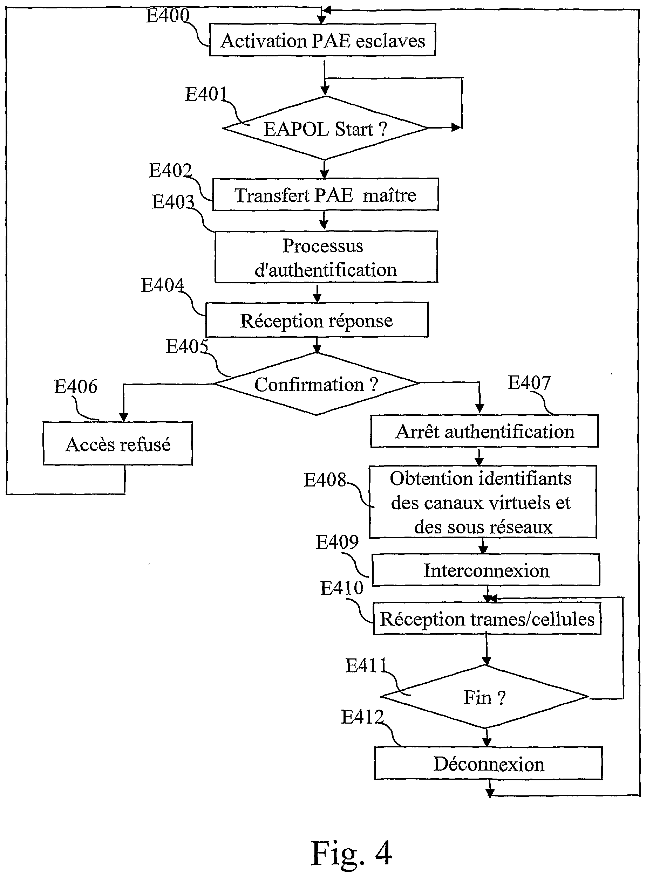

Le serveur d'authentification 120 authentifie un dispositif de communication 110 auprès du multiplexeur de lignes de clients 100 lorsque le dispositif de communication 110 désire accéder à un fournisseur de services 160, 170 ou 180. Cette authentification est effectuée à partir de l'identifiant du dispositif de communication 110 ou de l'utilisateur du dispositif de communication 110 tel que le nom de l'utilisateur et la fourniture d'un matériel d'authentification tel qu'un mot de passe. Cette authentification sera décrite plus en détail en regard de la Fig. 3 ou de la Fig. 4.

Selon l'invention, le serveur d'authentification 120 délivre, lors de l'authentification d'un dispositif de communication 110, pour chaque service auquel le dispositif de communication 110 est enregistré, l'identifiant du canal virtuel destiné à l'acheminement des informations associées au service entre le dispositif de communication 110 et le multiplexeur de lignes de clients 100, ainsi que le sous réseau destiné à l'acheminement des informations associées audit service entre le multiplexeur de lignes de clients 100 et le fournisseur de services.

Le serveur d'authentification 120 est par exemple un serveur d'authentification RADIUS tel que préconisé dans le standard IEEE 802.1x. Radius est l'acronyme de « Remote Authentication Dial In User Service ». Il est à remarquer ici que d'autres types de serveurs et de protocoles d'authentification peuvent être utilisés dans la présente invention. Ces protocoles sont par exemple et de manière non limitative de type « Diameter » ou de type « TACACS » acronyme de « Terminal Access Controller Access Control System » ou un protocole d'authentification utilisant un serveur d'authentification.

Il est à remarquer aussi que le multiplexeur de lignes de clients 100 peut aussi accéder au serveur d'authentification 120 par l'intermédiaire d'un serveur relais ou « proxy-Radius » (non représenté en Fig. 1) qui redirige les informations transférées vers des serveurs d'authentification (non représentés en Fig. 1) associés à chaque fournisseur de services 160, 170 et 180. Selon cette variante, chaque serveur d'authentification associé à un fournisseur de services mémorise des informations associées à tous les dispositifs de communication, voire à leurs utilisateurs, autorisés à accéder au service proposé par le fournisseur de services auquel ils sont associés ainsi que l'identifiant et le matériel d'authentification de chaque dispositif de communication, voire de son utilisateur.

Un proxy est un équipement qui reçoit des informations d'un premier dispositif de communication et transfère celles-ci vers un second dispositif de communication, et réciproquement qui reçoit des informations du second dispositif de communication et transfère celles-ci vers le premier dispositif de communication.

Une base de donnée 140 est associée au serveur d'authentification 120. La base de données 140 mémorise l'identifiant et le matériel d'authentification de chaque dispositif de communication 110 enregistré pour accéder aux services respectifs proposés par les fournisseurs de services 160, 170 et 180.

Selon l'invention, la base de données 140 mémorise, pour chaque dispositif de communication 110 et chaque service auquel l'utilisateur du dispositif de communication 110 a souscrit, l'identifiant du canal virtuel destiné à l'acheminement des informations associées au service entre le dispositif de communication 110 et le multiplexeur de lignes de clients 100 ainsi que chaque sous réseau respectif destiné à l'acheminement des informations associées audit service entre le multiplexeur de lignes de clients 100 et le fournisseur de services.

La Fig. 2 représente un schéma synoptique d'un multiplexeur de lignes de clients selon la présente invention.

Le multiplexeur numérique de lignes de clients 100 comporte un bus de communication 201 auquel sont reliées une unité centrale 200, une mémoire non volatile 202, une mémoire vive 203, une interface clients 205, une interface réseau de communication 206 et une interface serveur d'authentification 207.

La mémoire non volatile 202 mémorise les programmes mettant en oeuvre l'invention tel que l'algorithme qui sera décrit ultérieurement en référence à la Fig. 3 ou la Fig. 4. La mémoire non volatile 202 est par exemple un disque dur. De manière plus générale, les programmes selon la présente invention sont mémorisés dans un moyen de stockage. Ce moyen de stockage est lisible par un ordinateur ou un microprocesseur 200. Ce moyen de stockage est intégré ou non au multiplexeur numérique de lignes de clients 100, et peut être amovible. Lors de la mise sous tension du multiplexeur numérique de lignes de clients 100, les programmes sont transférés dans la mémoire vive 203 qui contient alors le code exécutable de l'invention ainsi que les données nécessaires à la mise en oeuvre de l'invention.

Le multiplexeur numérique de lignes de clients 100 comporte une interface réseau de communication 206. Cette interface permet les échanges de données vers le réseau de communication 150. Cette interface réseau de communication 206 est apte à transférer et ou recevoir des informations sous la forme de trames Ethernet.

Le multiplexeur numérique de lignes de clients 100 comporte une interface clients 205. Cette interface est, dans un mode préféré de réalisation, une interface de type DSL. L'interface clients 205 comporte, pour chaque dispositif de communication 110a et 110b, un port physique dédié aux communications point à point entre le multiplexeur numérique de lignes de clients 100 et le dispositif de communication 110 connecté à ce port par l'intermédiaire d'une liaison physique 130. L'interface clients 205 est apte à transférer des informations sous la forme de cellules ATM dans des canaux virtuels. L'interface clients 205 assure l'encapsulation/la désencapsulation des trames Ethernet à destination/en provenance du dispositif de communication client en cellules ATM (fonction SAR connue de l'homme du métier).

Par l'intermédiaire de l'interface serveur d'authentification 207, le processeur 200 interroge le serveur d'authentification 120 de manière à obtenir une confirmation ou non de l'authentification d'un dispositif de communication 110. Par cette même interface serveur d'authentification 207, le processeur 200 reçoit, pour chaque service auprès duquel le dispositif de communication 110 est enregistré, les identifiants du canal virtuel destiné à l'acheminement des informations associées au service entre le dispositif de communication 110 et le multiplexeur de lignes de clients 100, ainsi que l'identifiant du sous réseau destiné à l'acheminement des informations associées audit service souscrit entre le multiplexeur de lignes de clients 100 et le fournisseur de services, fournisseur dudit service.

Le multiplexeur numérique de lignes de clients 100 comporte des moyens 200, 205 de réception d'informations pour l'authentification d'un port du dispositif de communication par l'intermédiaire d'un canal virtuel, des moyens de vérification de l'authentification du dispositif de communication, des moyens d'obtention d'une confirmation de l'authentification du dispositif de communication, des moyens d'interconnexion, pour chaque service auquel le dispositif de communication est enregistré, du canal virtuel permettant le transfert d'informations associées audit service avec le sous réseau de communication permettant le transfert d'informations associées audit service.

Selon le premier mode de réalisation de la présente invention, un canal virtuel prédéterminé, parmi la pluralité de canaux virtuels ATM VC établis entre un dispositif de communication 110 et le multiplexeur de lignes de clients 100, est utilisé pour le transfert d'informations pour l'authentification d'un dispositif de communication 110. Ce canal virtuel prédéterminé, défini par l'opérateur du réseau de communication 150, est exclusivement dédié à ce transfert, ou bien est utilisé, lorsque l'authentification est confirmée, pour le transfert d'informations associées à un service prédéterminé. Dans ce premier mode de réalisation, le multiplexeur numérique de lignes de clients 100 comporte, pour chacun de ses ports physiques 130, un module logiciel, par exemple un module logiciel PAE, "acronyme de Port Access Entity" tel que décrit dans le standard IEEE 802.1x. Le module logiciel PAE comprend un sous module logiciel client Radius, tel que décrit dans le standard IEEE 802.1x qui dialogue avec le serveur d'authentification 120 selon le mode de relation client-serveur conformément au protocole Radius. Chaque module logiciel PAE est mis en oeuvre par le processeur 200. Chaque module logiciel PAE reçoit les requêtes d'authentification du dispositif de communication 110 relié au port physique dont il a la charge par l'intermédiaire du canal virtuel prédéterminé. Le module logiciel PAE interprète les requêtes d'authentification et relaie les échanges nécessaires à l'authentification entre le dispositif de communication 110 s'authentifiant et le serveur d'authentification 120.

Selon le second mode de réalisation de la présente invention, un canal virtuel quelconque, parmi la pluralité de canaux virtuels ATM VC établis entre un dispositif de communication 110 et le multiplexeur de lignes de clients 100, est utilisé pour le transfert d'informations pour l'authentification d'un dispositif de communication 110. Dans ce second mode de réalisation, le multiplexeur numérique de lignes de clients 100 comporte un module logiciel maître pour chaque port, par exemple un module logiciel PAE, acronyme de "Port Access Entity" tel que décrit dans le standard IEEE 802.1x. Le module logiciel PAE comprend un sous module logiciel client Radius, tel que décrit dans le standard IEEE 802.1x qui dialogue avec le serveur d'authentification 120 selon le mode de relation client-serveur conformément au protocole Radius. A chaque canal virtuel 131, 132, 133 d'un lien physique 130, est associé un module logiciel PAE esclave. Chaque module logiciel PAE esclave a pour fonction de détecter sur le canal virtuel dont il a la charge, les requêtes d'authentification issues d'un dispositif de communication 110, de transférer les informations contenues dans ces requêtes, ou les requêtes elles mêmes, au module logiciel PAE maître. Chaque module logiciel PAE esclave a pour fonction de détecter des déconnexions du dispositif de communication 110, de transférer les déconnexions détectées au module logiciel PAE maître. Un module logiciel PAE esclave détecte une déconnexion en recevant du dispositif de communication 110 un message représentatif de l'interruption de la connexion tel que par exemple une trame EAPoL-logoff telle qu'utilisée dans le standard IEEE 802.1x. EAPoL est l'acronyme de « EAP Over Lan » et EAP est l'acronyme de « Extensible Authentication Protocol ».

Le module logiciel PAE maître de chaque port du multiplexeur de lignes de clients 100 reçoit une requête d'authentification et relaie les échanges nécessaires à l'authentification entre le dispositif de communication 110 s'authentifiant et le serveur d'authentification 120. Un module logiciel PAE maître, lorsqu'un dispositif de communication 110 a été authentifié, ne traite plus les informations relatives à d'autres authentifications issues des modules logiciels esclaves qui lui sont associés.

Le processeur 200 implémente le module logiciel PAE maître ainsi que les différents modules logiciels PAE esclaves.

La Fig. 3 représente l'algorithme mis en oeuvre par un multiplexeur numérique de lignes de clients, pour le contrôle de l'accès par un dispositif de communication à au moins deux services selon un premier mode de réalisation de la présente invention.

Cet algorithme est exécuté en parallèle par chaque module logiciel PAE associé à chaque port physique du multiplexeur de lignes de clients 100. A l'état initial, chaque port physique du multiplexeur numérique de lignes de clients 100 est dans l'état "non autorisé" et seules les trames EAPoL sont traitées par le multiplexeur numérique de lignes de clients 100, toute autre trame étant détruite, conformément au standard IEEE 802.1x. Le présent algorithme va être décrit lorsqu'il est exécuté par le module logiciel PAE associé au port physique auquel le dispositif de communication 130a est relié.

L'étape E300 est une boucle d'attente, effectuée par le module logiciel PAE, de la réception d'une requête d'authentification sur un canal virtuel prédéterminé, par exemple le canal virtuel 131, reliant le multiplexeur de ligne de clients 100 et le dispositif de communication 110a pour l'authentification du dispositif de communication 110a. Plus précisément, le module logiciel PAE détecte la réception d'une trame de type EAPoL-Start du protocole EAPoL.

Lorsqu'une trame de type EAPoL-Start est détectée, le module logiciel PAE passe à l'étape E301. A cette étape, le dispositif de communication 110a et le serveur d'authentification 120 échangent des informations via le module logiciel PAE du multiplexeur numérique de lignes de clients 100 conformément aux protocoles EAP, EAPoL et Radius et en fonction de la méthode d'authentification négociée entre le dispositif de communication 110a et le serveur d'authentification 120. La méthode d'authentification est, par exemple, de type TLS, acronyme de « Transport Layer Security », telle que définie dans le document de l'IETF RFC 2246 ou de type MD5, acronyme de « Message Digest 5 ».

Lors de ces échanges, le dispositif de communication 110a fournit au serveur d'authentification 120 son identifiant et son matériel d'authentification. A la fin de ces échanges, et si les informations transmises par le dispositif de communication 110a sont validées par le serveur d'authentification 120, le serveur d'authentification 120 obtient de la base de données 140, les services auxquels le dispositif de communication 110a est enregistré, les identifiants des canaux virtuels destinés à l'acheminement des informations associées à ces services entre le dispositif de communication 110a et le multiplexeur de lignes de clients 100, ainsi que les sous réseaux destinés à l'acheminement des informations associées à ces services entre le multiplexeur de lignes de clients 100 et les fournisseurs de services. Il est à remarquer ici que le serveur d'authentification 120 obtient aussi, de la base de données 140, d'autres informations associées à ces services. Ces informations sont, par exemple et de manière non limitative, la qualité de service associée pour chaque service, ou des règles de filtrages.

A l'étape suivante E302, le module logiciel PAE reçoit une réponse du serveur d'authentification 120.

A l'étape suivante E303, le module logiciel PAE vérifie si la réponse transmise par le serveur d'authentification 120 est une confirmation de l'authentification du dispositif de communication 110a.

Dans la négative, le module logiciel PAE passe à l'étape E304 qui consiste à laisser le port 130a dans l'état "non autorisé" et donc à interdire l'accès aux services pour le dispositif de communication 110a. Le module logiciel PAE retourne à l'étape E300 en attente d'une nouvelle requête d'authentification.

Dans l'affirmative, le module logiciel PAE passe à l'étape E305. A cette étape, le module logiciel PAE lit, dans la réponse du serveur d'authentification 120 reçue à l'étape E302, pour chaque service auquel le dispositif de communication est enregistré, des informations représentatives du service. Les informations représentatives d'un service sont entre autres, les identifiants des canaux virtuels destinés à l'acheminement des informations associées à ces services entre le dispositif de communication 110a et le multiplexeur de lignes de clients 100, ainsi que les sous réseaux destinés à l'acheminement des informations associées à ces services entre le multiplexeur de lignes de clients 100 et les fournisseurs de service.

Il est à remarquer ici que le processeur 200 lit aussi, dans la réponse du serveur d'authentification 120 reçue à l'étape E302, d'autres informations telles que la qualité de service associée pour chaque service, ou des règles de filtrages pour une utilisation de celles-ci par la suite.

A l'étape suivante E306, le processeur 200 procède à l'interconnexion des canaux virtuels 131 et/ou 132 et/ou 133. Plus précisément, le processeur 200 interconnecte, pour chaque service auquel le dispositif de communication est enregistré, le canal virtuel permettant le transfert d'informations associées audit service avec le sous réseau de communication permettant le transfert d'informations associées audit service. Le module logiciel PAE autorise ainsi l'accès aux services pour l'ensemble des canaux virtuels permettant l'accès par le dispositif de communication 110a aux services auxquels le dispositif de communication 110a est enregistré.

Il est à remarquer ici que, si au moins un identifiant de canal virtuel reçu ne correspond pas à un canal virtuel établi sur la liaison physique reliant le dispositif de communication 110a et le multiplexeur de lignes de clients 100, le processeur 200 crée, pour chaque identifiant ne correspondant pas à un canal virtuel établi sur la liaison physique 130a, un canal virtuel sur la liaison physique reliant le dispositif de communication 110a et le multiplexeur de lignes de clients 100.

Ainsi, si l'utilisateur du dispositif de communication 110a a souscrit au service Internet du fournisseur de services 170, au service de télévision du fournisseur de services 160 mais n'a pas souscrit au service de téléphonie sur IP du fournisseur de services 180, le module logiciel PAE procède à l'interconnexion du canal virtuel 131 avec le sous réseau 167, à l'interconnexion du canal virtuel 132 avec le sous réseau 166 et ne procède pas à l'interconnexion du canal virtuel 133 avec le sous réseau 168. Une interconnexion correspond à une association entre un canal virtuel et un sous réseau pour le transfert des trames reçues du sous réseau vers le canal virtuel et pour le transfert de cellules ATM reçues du canal virtuel vers le sous réseau.

Dans une variante de réalisation, l'interconnexion est effectuée en activant les terminaisons des canaux virtuels 131 et 132 dans le multiplexeur de lignes de clients 100 ou en modifiant le statut des canaux virtuels 131 et 132 en passant ceux-ci d'un mode inactif dans un mode actif.

A l'étape suivante E307, chaque trame reçue d'un sous réseau est transférée au canal virtuel auquel il est interconnecté sous la forme de cellules ATM, ou les cellules ATM reçues d'un canal virtuel sont transférées au sous réseau auquel il est interconnecté sous la forme de trames.

A l'étape suivante E308, le module logiciel PAE vérifie si un message représentatif d'une déconnexion du dispositif de communication 110a est reçu par l'intermédiaire du canal virtuel 131. Ce message est, par exemple, un message de type EAPoL-Logoff du protocole EAPoL. Dans la négative, le module logiciel PAE retourne à l'étape E307. Dans l'affirmative, le module logiciel PAE passe à l'étape E309.

A l'étape E309, le module logiciel PAE interrompt l'interconnexion des canaux virtuels 131 à 133 des sous réseaux 166, 167 et 168.

Dans une variante de réalisation, l'interruption de l'interconnexion est effectuée en désactivant les terminaisons des canaux virtuels dans le multiplexeur de lignes de clients 100 ou en modifiant le statut des canaux virtuels lus à l'étape E305 en passant ceux-ci d'un mode actif dans un mode inactif. Le port physique passe alors à l'état "non autorisé" et le module logiciel PAE retourne à l'étape E300.

La Fig. 4 représente l'algorithme mis en oeuvre par un multiplexeur numérique de lignes de clients, pour le contrôle de l'accès par un dispositif de communication à au moins deux services selon un second mode de réalisation de la présente invention.

Cet algorithme est exécuté en parallèle par chaque module logiciel PAE maître associé à chaque port physique du multiplexeur de lignes de clients 100. A l'état initial, chaque port physique du multiplexeur numérique de lignes de clients 100 est dans l'état "non autorisé" et seules les trames EAPoL sont traitées par le multiplexeur numérique de lignes de clients 100, toute autre trame étant détruite, conformément au standard IEEE 802.1x.

Le présent algorithme va être décrit lorsqu'il est exécuté par le module logiciel PAE maître associé au port physique auquel le lien physique 130a est relié.

A l'étape E400, le module logiciel PAE maître active les modules logiciels PAE esclaves associés aux canaux virtuel 131, 132 et 133. Chaque module logiciel PAE esclave surveille le canal virtuel dont il a la charge et détecte les requêtes d'authentification issues d'un dispositif de communication 110a.

L'étape E401 est une boucle d'attente, effectuée par chaque module logiciel PAE esclave, de la réception d'une requête d'authentification sur le canal virtuel dont il a la charge. Plus précisément, un module logiciel PAE esclave détecte la réception d'une trame de type EAPoL-Start du protocole EAPoL.

Lorsqu'une trame de type EAPoL-Start est détectée, le module logiciel PAE esclave ayant détecté la trame EAPoL-Start passe à l'étape E402 et transfère les informations contenues dans la requête, ou la requête elle-même, au module logiciel PAE maître.

A l'étape suivante E403, le dispositif de communication 110a et le serveur d'authentification 120 échangent des informations via les modules logiciels PAE maître et esclaves du multiplexeur numérique de lignes de clients 100 conformément aux protocoles EAP, EAPoL et Radius et en fonction de la méthode d'authentification négociée entre le dispositif de communication et le serveur d'authentification. Ces protocoles sont, par exemple de type MD5 ou conformes à la RFC 2246. Lors de ces échanges, le dispositif de communication 110a fournit au serveur d'authentification 120 son identifiant et son matériel d'authentification. A la fin de ces échanges, et si les informations transmises par le dispositif de communication 110a sont validées par le serveur d'authentification 120, le serveur d'authentification 120 obtient de la base de données 140 les services auxquels le dispositif de communication 110a est enregistré, les identifiants des canaux virtuels destinés à l'acheminement des informations associées à ces services entre le dispositif de communication 110a et le multiplexeur de lignes de clients 100, ainsi que les sous réseaux destinés à l'acheminement des informations associées à ces services entre le multiplexeur de lignes de clients 100 et les fournisseurs de service.

Il est à remarquer ici que le serveur d'authentification 120 obtient aussi, de la base de données 140, d'autres informations associées à ces services. Ces informations sont, par exemple et de manière non limitative, la qualité de service associée pour chaque service, ou des règles de filtrages.

A l'étape suivante E404, le module logiciel PAE maître reçoit une réponse du serveur d'authentification 120.

A l'étape suivante E405, le module logiciel PAE maître vérifie si la réponse transmise par le serveur d'authentification 120 est une confirmation de l'authentification du dispositif de communication 110a.

Dans la négative, le module logiciel PAE passe à l'étape E406 qui consiste à laisser le port 130a dans l'état "non autorisé" et donc à interdire l'accès au dispositif de communication 110a aux services. Le module logiciel PAE retourne à l'étape E400 en attente d'une nouvelle requête d'authentification. Le module logiciel PAE maître réinitialise, à cette même étape, l'ensemble des modules logiciels PAE esclaves sur le port physique pour lequel l'authentification vient d'échouer.

Dans l'affirmative, le module logiciel PAE maître passe à l'étape E407 et arrête le traitement de toute requête d'authentification du dispositif de communication 110a. Les modules logiciels PAE esclaves associés au port physique pour lequel l'authentification vient de réussir se mettent à l'écoute de trames de déconnexion de type EAPoL-Logoff.

A l'étape suivante E408, le module logiciel PAE maître lit, dans la réponse du serveur d'authentification 120 reçue à l'étape E404, pour chaque service auquel le dispositif de communication est enregistré, des informations représentatives du service. Les informations représentatives d'un service sont entre autres, les identifiants des canaux virtuels destinés à l'acheminement des informations associées à ces services entre le dispositif de communication 110 et le multiplexeur de lignes de clients 100 ainsi que les sous réseaux destinés à l'acheminement des informations associées à ces services entre le multiplexeur de lignes de clients 100 et les fournisseurs de service respectifs.

Il est à remarquer ici que le processeur 200 lit aussi, dans la réponse du serveur d'authentification 120 reçue à l'étape E404, d'autres informations telles que la qualité de service associée pour chaque service, ou des règles de filtrages pour une utilisation de celles-ci par la suite.

A l'étape suivante E409, le module logiciel PAE maître procède à l'interconnexion des canaux virtuels destinés à l'acheminement des informations associées aux services auxquels le dispositif de communication 110a est enregistré et des sous réseaux destinés à l'acheminement des informations associées aux services auxquels le dispositif de communication 110a est enregistré. Plus précisément, le processeur 200 interconnecte, pour chaque service auquel le dispositif de communication est enregistré, le canal virtuel permettant le transfert d'informations associées audit service avec le sous réseau de communication permettant le transfert d'informations associées audit service. Le processeur 200 contrôle et autorise ainsi l'accès aux services pour l'ensemble des canaux virtuels permettant l'accès par le dispositif de communication aux services auxquels le dispositif de communication 110a est enregistré.

Dans une variante de réalisation, l'interconnexion est effectuée en activant les terminaisons des canaux virtuels lus à l'étape E408 dans le multiplexeur de lignes de clients 100 ou en modifiant le statut des canaux virtuels lus à l'étape E408 en passant ceux-ci d'un mode inactif dans un mode actif.

Il est à remarquer ici que, si au moins un identifiant de canal virtuel reçu ne correspond pas à un canal virtuel établi sur la liaison physique 130a reliant le dispositif de communication 110a et le multiplexeur de lignes de clients 100, le processeur 200 crée, pour chaque identifiant ne correspondant pas à un canal virtuel établi sur la liaison physique 130a, un canal virtuel sur la liaison physique 130a reliant le dispositif de communication 110a et le multiplexeur de lignes de clients 100.

A l'étape suivante E410, chaque trame reçue d'un sous réseau est transférée au canal virtuel auquel il est interconnecté sous la forme de cellules ATM, ou les cellules ATM reçues d'un canal virtuel sont transférées au sous réseau auquel il est interconnecté sous la forme de trames.

A l'étape suivante E411, le module logiciel PAE maître vérifie la présence d'informations représentatives d'une déconnexion du dispositif de communication 110a.

Pour cela, le module logiciel PAE maître vérifie si un des modules logiciels PAE esclaves associés aux canaux virtuels 131 à 133 a détecté et lui a transmis un message représentatif d'une déconnexion du dispositif de communication 110a. Ce message est par exemple un message de type EAPoL-Logoff du protocole EAPoL. Dans la négative, le module logiciel PAE maître retourne à l'étape E410. Dans l'affirmative, le module logiciel PAE maître passe à l'étape E412.

A l'étape E412, le module logiciel PAE maître interrompt l'interconnexion des canaux virtuels 131 à 133 des sous réseaux 166, 167 et 168.

Dans une variante de réalisation, l'interruption de l'interconnexion est effectuée en désactivant les terminaisons des canaux virtuels dans le multiplexeur de lignes de clients 100 ou en modifiant le statut des canaux virtuels lus à l'étape E408 en passant ceux-ci d'un mode actif dans un mode inactif. Le port physique passe alors à l'état "non autorisé" et le module logiciel PAE maître retourne à l'étape E400.

La présente invention a été décrite lorsque le multiplexeur de lignes de clients 100 exécute les algorithmes des Fig. 3 et 4. Bien entendu, un autre dispositif de communication, tel qu'un serveur associé à une pluralité de multiplexeurs de lignes de clients, peut aussi exécuter les algorithmes précédemment décrits.

Bien entendu, la présente invention n'est nullement limitée aux modes de réalisation décrits ici, mais englobe, bien au contraire, toute variante à la portée de l'homme du métier.

## Revendications

1. Procédé de contrôle de l'accès par un dispositif de communication (110) à au moins deux services, le dispositif de communication étant relié à un multiplexeur de lignes de clients (100) par l'intermédiaire d'une liaison physique (130a) sur laquelle des canaux virtuels (131, 132, 133) sont établis, au moins deux des canaux virtuels permettant le transfert d'informations associées respectivement à des services, le multiplexeur de lignes de clients (100) étant relié à des sous réseaux de communication (166, 167, 168) d'un réseau de communication (150), chaque sous réseau de communication permettant le transfert d'informations associées respectivement à un service, **caractérisé en ce que** le procédé comporte les étapes de :
- réception (E300, E401) d'informations pour l'authentification du dispositif de communication par l'intermédiaire d'un canal virtuel,
- obtention, (E305, E408) à partir des informations reçues, d'informations représentatives de chaque service auquel le dispositif de communication est enregistré,
- interconnexion (E306, E409), pour chaque service auquel le dispositif de communication est enregistré, du canal virtuel permettant le transfert d'informations associées audit service avec le sous réseau de communication permettant le transfert d'informations associées audit service.

2. Procédé selon la revendication 1, **caractérisé en ce que** le procédé comporte en outre des étapes de vérification (E301, E403) et d'obtention (E302, E404) de la confirmation de l'authentification du dispositif de communication auprès d'un serveur d'authentification (120) et **en ce que** les informations représentatives de chaque service auquel le dispositif de communication est enregistré sont obtenues du serveur d'authentification.

3. Procédé selon la revendication 2, **caractérisé en ce que** les informations représentatives de chaque service auquel le dispositif de communication est enregistré sont les identifiants de chaque canal virtuel permettant le transfert d'informations associées à un service auquel le dispositif de communication est enregistré et les identifiants de chaque sous réseau permettant le transfert d'informations associées au service auquel le dispositif de communication est enregistré.

4. Procédé selon la revendication 3, **caractérisé en ce que** le procédé comporte en outre l'étape de création d'au moins un canal virtuel sur la liaison physique reliant le dispositif de communication et le multiplexeur de lignes de clients si au moins un identifiant de canal virtuel reçu ne correspond pas à un canal virtuel établi sur la liaison physique reliant le dispositif de communication et le multiplexeur de lignes de clients.

5. Procédé selon l'une quelconque des revendications 1 à 4, **caractérisé en ce que** le canal virtuel par l'intermédiaire duquel les informations pour l'authentification du dispositif de communication sont reçues est un canal virtuel prédéterminé parmi l'ensemble des canaux virtuels établis sur la liaison physique reliant le dispositif de communication et le multiplexeur numérique de lignes de clients.

6. Procédé selon la revendication 5, **caractérisé en ce que** le canal virtuel prédéterminé est un canal virtuel permettant le transfert d'informations associées à un service prédéterminé.

7. Procédé selon l'une quelconque des revendications 1 à 4, **caractérisé en ce que** chaque canal virtuel permet le transfert d'informations associées à un service respectif et **en ce que** le canal virtuel, par l'intermédiaire duquel les informations pour l'authentification du dispositif de communication sont reçues, est un quelconque canal virtuel parmi l'ensemble des canaux virtuels établis sur la liaison physique reliant le dispositif de communication et le multiplexeur numérique de lignes de clients.

8. Procédé selon la revendication 7, **caractérisé en ce qu'**on détecte, sur chaque canal virtuel reliant le dispositif de communication et le multiplexeur de lignes de clients, la requête d'authentification, et lorsque la requête d'authentification a été détectée et que la confirmation de l'authentification du dispositif de communication a été obtenue, on interrompt la détection, sur chaque canal virtuel établi sur le lien reliant le dispositif de communication et le multiplexeur de lignes de clients, d'une requête d'authentification.

9. Dispositif de contrôle de l'accès par un dispositif de communication à au moins deux services, le dispositif de communication étant relié à un multiplexeur de lignes de clients par l'intermédiaire d'une liaison physique sur laquelle des canaux virtuels sont établis, au moins deux des canaux virtuels permettant le transfert d'informations associées respectivement à des services, le multiplexeur de lignes de clients étant relié à des sous réseaux de communication d'un réseau de communication, chaque sous réseau de communication permettant le transfert d'informations associées respectivement à un service, **caractérisé en ce que** le dispositif comporte :
- des moyens de réception d'informations pour l'authentification du dispositif de communication par l'intermédiaire d'un canal virtuel,
- des moyens d'obtention, à partir des informations reçues, d'informations représentatives de chaque service auquel le dispositif de communication est enregistré,
- des moyens d'interconnexion, pour chaque service auquel le dispositif de communication est enregistré, du canal virtuel permettant le transfert d'informations associées audit service avec le sous réseau de communication permettant le transfert d'informations associées audit service.

10. Programme d'ordinateur stocké sur un support d'informations, ledit programme comportant des instructions permettant de mettre en oeuvre le procédé selon l'une quelconque des revendications 1 à 8 lorsqu'il est chargé et exécuté par un multiplexeur de lignes de clients.

## Patentansprüche

1. Verfahren zur Kontrolle des Zugangs durch eine Kommunikationsvorrichtung (110) zu mindestens zwei Diensten, wobei die Kommunikationsvorrichtung an einen Multiplexer von Client-Leitungen (100) über eine physikalische Verbindung (130a) angeschlossen wird, auf der virtuelle Kanäle (131, 132, 133) erstellt werden, wobei mindestens zwei der virtuellen Kanäle das Übertragen von Informationen ermöglichen, die jeweils mit Diensten verbunden werden, wobei der Multiplexer von Client-Leitungen (100) an Subkommunikationsnetze (166, 167, 168) eines Kommunikationsnetzes (150) angeschlossen wird, wobei jedes Subkommunikationsnetz das Übertragen von Informationen ermöglicht, die jeweils mit einem Dienst verbunden werden, **dadurch gekennzeichnet, dass** das Verfahren die folgenden Schritte aufweist:
- Empfangen (E300, E401) von Informationen für die Authentifizierung der Kommunikationsvorrichtung durch einen virtuellen Kanal,
- Erhalten (E305, E408), ausgehend von den empfangenen Informationen, von Informationen, die für jeden Dienst repräsentativ sind, bei dem die Kommunikationsvorrichtung registriert ist,
- Zusammenschalten (E306, E409), für jeden Dienst, bei dem die Kommunikationsvorrichtung registriert ist, des virtuellen Kanals, der das Übertragen von Informationen ermöglicht, die mit dem Dienst verbunden werden, mit dem Subkommunikationsnetz, das das Übertragen von Informationen ermöglicht, die mit dem Dienst verbunden werden.

2. Verfahren nach Anspruch 1, **dadurch gekennzeichnet, dass** das Verfahren ferner Schritte des Überprüfens (E301, E403) und des Erhaltens (E302, E404) der Bestätigung der Authentifizierung der Kommunikationsvorrichtung bei einem Authentifizierungsserver (120) aufweist, und dass die Informationen, die für jeden Dienst repräsentativ sind, bei dem die Kommunikationsvorrichtung registriert ist, von dem Authentifizierungsserver erhalten werden.

3. Verfahren nach Anspruch 2, **dadurch gekennzeichnet, dass** die Informationen, die für jeden Dienst repräsentativ sind, bei dem die Kommunikationsvorrichtung registriert ist, die Kennungen von jedem virtuellen Kanal, der das Übertragen von Informationen ermöglicht, die mit einem Dienst verbunden werden, bei dem die Kommunikationsvorrichtung registriert ist, und die Kennungen von jedem Subnetz sind, das das Übertragen von Informationen ermöglicht, die mit dem Dienst verbunden werden, bei dem die Kommunikationsvorrichtung registriert ist.

4. Verfahren nach Anspruch 3, **dadurch gekennzeichnet, dass** das Verfahren ferner den Schritt des Erstellens von mindestens einem virtuellen Kanal auf der physikalischen Verbindung, die die Kommunikationsvorrichtung und den Multiplexer von Client-Leitungen verbindet, aufweist, wenn mindestens eine empfangene Kennung eines virtuellen Kanals, einem virtuellen Kanal nicht entspricht, der auf der physikalischen Verbindung erstellt wird, die die Kommunikationsvorrichtung und den Multiplexer von Client-Leitungen verbindet.

5. Verfahren nach einem der Ansprüche 1 bis 4, **dadurch gekennzeichnet, dass** der virtuelle Kanal, durch den die Informationen für die Authentifizierung der Kommunikationsvorrichtung empfangen werden, ein vorbestimmter virtueller Kanal aus der Gesamtheit von virtuellen Kanälen ist, die auf der physikalischen Verbindung erstellt werden, die die Kommunikationsvorrichtung und den digitalen Multiplexer von Client-Leitungen verbindet.

6. Verfahren nach Anspruch 5, **dadurch gekennzeichnet, dass** der vorbestimmte virtuelle Kanal ein virtueller Kanal ist, der das Übertragen von Informationen ermöglicht, die mit einem vorbestimmten Dienst verbunden werden.

7. Verfahren nach einem der Ansprüche 1 bis 4, **dadurch gekennzeichnet, dass** jeder virtuelle Kanal das Übertragen von Informationen ermöglicht, die mit einem jeweiligen Dienst verbunden werden, und dass der virtuelle Kanal, durch den die Informationen für die Authentifizierung der Kommunikationsvorrichtung empfangen werden, ein beliebiger virtueller Kanal aus der Gesamtheit von virtuellen Kanälen ist, die auf der physikalischen Verbindung erstellt werden, die die Kommunikationsvorrichtung und den digitalen Multiplexer von Client-Leitungen verbindet.

8. Verfahren nach Anspruch 7, **dadurch gekennzeichnet, dass** auf jedem virtuellen Kanal, der die Kommunikationsvorrichtung und den Multiplexer von Client-Leitungen verbindet, die Authentifizierungsanfrage erfasst wird, und, wenn die Authentifizierungsanfrage erfasst worden ist und die Bestätigung der Authentifizierung der Kommunikationsvorrichtung erhalten worden ist, das Erfassen von einer Authentifizierungsanfrage auf jedem virtuellen Kanal, der auf der Verbindung erstellt wird, die die Kommunikationsvorrichtung und den Multiplexer von Client-Leitungen verbindet, unterbrochen wird.

9. Vorrichtung zur Kontrolle des Zugangs durch eine Kommunikationsvorrichtung zu mindestens zwei Diensten, wobei die Kommunikationsvorrichtung an einen Multiplexer von Client-Leitungen über eine physikalische Verbindung angeschlossen ist, auf der virtuelle Kanäle erstellt sind, wobei mindestens zwei der virtuellen Kanäle das Übertragen von Informationen ermöglichen, die jeweils mit Diensten verbunden sind, wobei der Multiplexer von Client-Leitungen an Subkommunikationsnetze eines Kommunikationsnetzes angeschlossen ist, wobei jedes Subkommunikationsnetz das Übertragen von Informationen ermöglicht, die jeweils mit einem Dienst verbunden sind, **dadurch gekennzeichnet, dass** die Vorrichtung Folgendes aufweist:
- Mittel zum Empfangen von Informationen für die Authentifizierung der Kommunikationsvorrichtung durch einen virtuellen Kanal,
- Mittel zum Erhalten, ausgehend von den empfangenen Informationen, von Informationen, die für jeden Dienst repräsentativ sind, bei dem die Kommunikationsvorrichtung registriert ist,
- Mittel zum Zusammenschalten, für jeden Dienst, bei dem die Kommunikationsvorrichtung registriert ist, des virtuellen Kanals, der das Übertragen von Informationen ermöglicht, die mit dem Dienst verbunden sind, mit dem Subkommunikationsnetz, das das Übertragen von Informationen ermöglicht, die mit dem Dienst verbunden sind.

10. Computerprogramm, das auf einem Informationsträger gespeichert ist, wobei das Programm Anleitungen aufweist, die ermöglichen, das Verfahren nach einem der Ansprüche 1 bis 8 umzusetzen, wenn es geladen ist und von einem Multiplexer von Client-Leitungen ausgeführt wird.

## Claims

1. Method of controlling access by a communication device (110) to at least two services, the communication device being linked to a customer line multiplexer (100) by way of a physical link (130a) on which virtual channels (131, 132, 133) are established, at least two of the virtual channels enabling the transfer of information items associated respectively with services, the customer line multiplexer (100) being linked to communication sub-networks (166, 167, 168) of a communication network (150), each communication sub-network enabling the transfer of information items associated respectively with a service, **characterized in that** the method comprises the steps of:
- reception (E300, E401) of information items for the authentication of the communication device by way of a virtual channel,
- obtaining, (E305, E408) on the basis of the information items received, of information items representative of each service with which the communication device is registered,
- interconnection (E306, E409), for each service with which the communication device is registered, of the virtual channel enabling the transfer of information items associated with the said service with the communication sub-network enabling the transfer of information items associated with the said service.

2. Method according to Claim 1, **characterized in that** the method furthermore comprises steps of verification (E301, E403) and of obtaining (E302, E404) of the confirmation of the authentication of the communication device with an authentication server (120) and **in that** the information items representative of each service with which the communication device is registered are obtained from the authentication server.

3. Method according to Claim 2, **characterized in that** the information items representative of each service with which the communication device is registered are the identifiers of each virtual channel enabling the transfer of information items associated with a service with which the communication device is registered and the identifiers of each sub-network enabling the transfer of information items associated with the service with which the communication device is registered.

4. Method according to Claim 3, **characterized in that** the method furthermore comprises the step of creating at least one virtual channel on the physical link linking the communication device and the customer line multiplexer if at least one virtual channel identifier received does not correspond to a virtual channel established on the physical link linking the communication device and the customer line multiplexer.

5. Method according to any one of Claims 1 to 4, **characterized in that** the virtual channel by way of which the information items for the authentication of the communication device are received is a predetermined virtual channel from among the set of virtual channels established on the physical link linking the communication device and the customer line digital multiplexer.

6. Method according to Claim 5, **characterized in that** the predetermined virtual channel is a virtual channel enabling the transfer of information items associated with a predetermined service.

7. Method according to any one of Claims 1 to 4, **characterized in that** each virtual channel enables the transfer of information items associated with a respective service and **in that** the virtual channel, by way of which the information items for the authentication of the communication device are received, is any virtual channel from among the set of virtual channels established on the physical link linking the communication device and the customer line digital multiplexer.

8. Method according to Claim 7, **characterized in that** the authentication request is detected, on each virtual channel linking the communication device and the customer line multiplexer, and when the authentication request has been detected and confirmation of the authentication of the communication device has been obtained, the detection, on each virtual channel established on the linkup linking the communication device and the customer line multiplexer, of an authentication request is interrupted.

9. Device for controlling access by a communication device to at least two services, the communication device being linked to a customer line multiplexer by way of a physical link on which virtual channels are established, at least two of the virtual channels enabling the transfer of information items associated respectively with services, the customer line multiplexer being linked to communication sub-networks of a communication network, each communication sub-network enabling the transfer of information items associated respectively with a service, **characterized in that** the device comprises:
- means for receiving information items for the authentication of the communication device by way of a virtual channel,
- means for obtaining, on the basis of the information items received, information items representative of each service with which the communication device is registered,
- means for interconnecting, for each service with which the communication device is registered, the virtual channel enabling the transfer of information items associated with the said service with the communication sub-network enabling the transfer of information items associated with the said service.

10. Computer program stored on an information medium, the said program comprising instructions making it possible to implement the method according to any one of Claims 1 to 8 when it is loaded and executed by a customer line multiplexer.
